# EUROPÄISCHE PATENTSCHRIFT

(11) **EP 3 678 821 B1**
(45) Veröffentlichungstag und Bekanntmachung des Hinweises auf die Patenterteilung: **10.03.2021**
(21) Anmeldenummer: 18803902.8
(22) Anmeldetag: 08.11.2018
(51) Int. Cl.: B25J 9/00, B25J 9/16

(54) **EXOSKELETT-SYSTEM, STEUEREINRICHTUNG UND VERFAHREN**
EXOSKELETON SYSTEM, CONTROL DEVICE AND METHOD
SYSTÈME D'EXOSQUELETTE, DISPOSITIF DE COMMANDE ET PROCÉDÉ

(30) Priorität: 09.11.2017 DE 102017126259
(43) Veröffentlichungstag der Anmeldung: 15.07.2020
(60) Teilanmeldung: 20210033.5
(73) Patentinhaber: Universität Stuttgart, 70174 Stuttgart (DE)
(72) Erfinder: SIEGERT, Joerg, 70569 Stuttgart (DE); SCHNEIDER, Urs, 70569 Stuttgart (DE)
(74) Vertreter: Witte, Weller & Partner Patentanwälte mbB
(86) Internationale Anmeldenummer: PCT/EP2018/080578
(87) Internationale Veröffentlichungsnummer: WO 2019/092088

(56) Entgegenhaltungen:
- US-A1- 2005 209 536
- US-B2- 7 774 177
- SEBASTIAN HERNANDEZ ET AL: "Refinement of exoskeleton design using multibody modeling: an overview", ROBOTICS AND AUTONOMOUS SYSTEMS., 29. Mai 2015 (2015-05-29), XP055553704, NL ISSN: 0921-8890 in der Anmeldung erwähnt

## Beschreibung

Die vorliegende Erfindung betrifft das Gebiet der körpergetragenen Assistenzsysteme und insbesondere ein Endo/Exoskelett-System, eine Steuereinrichtung und ein Verfahren.

Exoskelette sind aus dem Stand der Technik bekannt.

Bei solchen Exoskeletten handelt es sich im Allgemeinen um äußere Stützstrukturen, unter anderem um Rüstungen, die Bewegungen eines Trägers beispielsweise mithilfe von mittels Servomotoren angetriebenen Gelenken unterstützen oder verstärken können. Künstliche Exoskelette kommen beispielsweise als Orthesen seit langem in der Medizin zum Einsatz. Die vorliegende Offenbarung befasst sich mit künstlichen Endo- und/oder Exoskeletten.

Vorteilhafte Anwendungsgebiete von Exoskeletten umfassen medizinische Anwendungen, industrielle Anwendungen sowie militärische Anwendungen. Im medizinischen Bereich finden Exoskelette insbesondere im Bereich der Rehabilitationsrobotik Anwendung und dienen zur Unterstützung bei körperlichen Defiziten. Im industriellen sowie militärischen Bereich sollen Exoskelette die Leistungsfähigkeit der Nutzer erhöhen, insbesondere deren Kraft verstärken, etwa zum Heben und Transport schwerer Lasten, sowie die Ausdauer der Nutzer steigern.

Ein Beispiel eines Exoskeletts in Form eines Exoskelett-Anzugs ist das HAL (Hybrid Assistive Limb, d.h., hybride unterstützende Gliedmaße) der Tsukuba-Universität aus Japan und des Robotik-Unternehmens Cyberdyne Inc.

Aus der Druckschrift EP 3 173 191 A2 ist ein Verfahren zur Schätzung der Haltung einer robotischen Gehhilfe bekannt.

Aus der US 9 655 805 B2 sind ferner ein Laufassistenzroboter und ein zugehöriges Steuerungsverfahren bekannt.

US 7,774,177 B2 offenbart eine Exoskelett-Steuereinrichtung für ein Mesch-Exoskelett-System.

Eine Herausforderung besteht darin, dass mechanische Design des Exoskeletts derart auszulegen, dass eine Bewegung des Exoskeletts mit einer Bewegungen des Nutzers übereinstimmt. Vorzugsweise wird ein Exoskelett derart an den Körper des Nutzers angepasst, dass Gelenke des Exoskeletts nahe den Gelenken des Nutzers angeordnet sind. Hernandez et al. beschreiben in "Refinement of exoskeleton design using multibody modelling: an overview", CCToMM Machanics, Machines and Mechatronics (M3) Symposium, 2015, dass bei der Auslegung eines Exoskeletts ein Mehrkörpersystem des menschlichen Körpers zugrunde gelegt werden kann, um daraus die erforderlichen Freiheitsgrade für das mechanische Design des Exoskeletts abzuleiten.

Die Ansteuerung eines bekannten Exoskeletts kann auf zweierlei Art und Weise erfolgen. Erstens kann das Exoskelett einer vom Nutzer vorgegebene Bewegung folgen. Hierzu kann ein Bewegungswunsch des Nutzers erfasst werden. Beispielsweise kann ein Drucksensor oder ein Drehmomentsensor in einem Gelenk des Exoskeletts eine Bewegung des Nutzers erfassen und das Exoskelett dieser folgen. Alternativ kann ein EMG (Elektromyogramm-) Sensor vorgesehen sein, welcher die Aktivierung eines Muskels oder einer Muskelgruppe erfasst. Das Exoskelett kann eine der Aktivierung des Muskels entsprechende Bewegung ausführen. Somit steuert allein die Bewegung bzw. der Bewegungswunsch des Nutzers das Exoskelett.

Zweitens kann, insbesondere im Bereich der Rehabilitationsmedizin, das Exoskelett dem Nutzer eine vordefinierte Bewegung vorgeben. Dadurch können Bewegungsabläufe neu erlernt werden, welche beispielsweise in Folge eines Schlaganfalls verloren gegangen sind.

Ein Nachteil von bestehenden Exoskelett-Systemen ist eine relative unpräzise Steuerung. Die Erfinder haben erkannt, dass dies insbesondere dann problematisch ist, wenn mehrere Personen, welche jeweils ein Exoskelett tragen, zusammenarbeiten. Ein erster Lösungsansatz besteht nun darin, die Sensorik zur Erfassung der Bewegungswünsche der Nutzer zu verbessern und somit eine präzisere Steuerung der jeweils einzelnen Exoskelette zu ermöglichen.

Vor diesem Hintergrund liegt der vorliegenden Erfindung die Aufgabe zugrunde, ein verbessertes Exoskelett-System bereitzustellen. Insbesondere wäre es wünschenswert, das Zusammenwirken von Mensch und Exoskelett weiter zu verbessern.

Gemäß einem ersten Aspekt der vorliegenden Offenbarung wird daher vorgeschlagen ein Exoskelett-System bereitzustellen, das Exoskelett-System aufweisend:
- eine erste Exoskeletteinheit zur Unterstützung eines ersten Körperteils;
- eine zweite Exoskeletteinheit zur Unterstützung eines zweiten Körperteils; und
- eine Steuereinrichtung;
wobei die Steuereinrichtung dazu ausgebildet ist, die erste Exoskeletteinheit und/oder die zweite Exoskeletteinheit basierend auf einem Regelungsmodell anzusteuern, wobei das Regelungsmodell auf einem Mehrkörpersystem basiert, welches
- die erste Exoskeletteinheit,
- die zweite Exoskeletteinheit; und
- den ersten und/oder zweiten Körperteil (zumindest teilweise) modelliert (bzw. abbildet); und wobei die erste Exoskeletteinheit und die zweite Exoskeletteinheit mechanisch voneinander entkoppelt sind
wobei der erste Körperteil, welcher von der ersten Exoskeletteinheit unterstützt wird, ein Körperteil eines ersten Nutzers ist; und
wobei der zweite Körperteil, welcher von der zweiten Exoskeletteinheit unterstützt wird, ein Körperteil eines zweiten Nutzers ist.

Gemäß einem zweiten Aspekt der vorliegenden Offenbarung wird vorgeschlagen eine Steuereinrichtung zur Ansteuerung einer ersten und/oder zweiten Exoskeletteinheit eines Exoskelett-Systems bereitzustellen, wobei das Exoskelett-System die erste Exoskeletteinheit zur Unterstützung eines ersten Körperteils und die zweite Exoskeletteinheit zur Unterstützung eines zweiten Körperteils aufweist; wobei die Steuereinrichtung dazu ausgebildet ist, die erste Exoskeletteinheit und/oder die zweite Exoskeletteinheit basierend auf einem Regelungsmodell anzusteuern, wobei das Regelungsmodell auf einem Mehrkörpersystem basiert, welches
- die erste Exoskeletteinheit,
- die zweite Exoskeletteinheit; und
- den ersten und/oder zweiten Körperteil, modelliert;
wobei die erste Exoskeletteinheit und die zweite Exoskeletteinheit mechanisch voneinander entkoppelt sind; wobei der erste Körperteil, welcher von der ersten Exoskeletteinheit unterstützt wird, ein Körperteil eines ersten Nutzers ist; und wobei der zweite Körperteil, welcher von der zweiten Exoskeletteinheit unterstützt wird, ein Körperteil eines zweiten Nutzers ist.

Gemäß einem dritten Aspekt der vorliegenden Offenbarung wird vorgeschlagen ein Verfahren zur Ansteuerung einer ersten und/oder zweiten Exoskeletteinheit eines Exoskelett-Systems bereitzustellen, wobei das Exoskelett-System die erste Exoskeletteinheit zur Unterstützung eines ersten Körperteils und die zweite Exoskeletteinheit zur Unterstützung eines zweiten Körperteils aufweist; wobei die erste Exoskeletteinheit und die zweite Exoskeletteinheit mechanisch voneinander entkoppelt sind; wobei der erste Körperteil, welcher von der ersten Exoskeletteinheit unterstützt wird, ein Körperteil eines ersten Nutzers ist; und wobei der zweite Körperteil, welcher von der zweiten Exoskeletteinheit unterstützt wird, ein Körperteil eines zweiten Nutzers ist; wobei das Verfahren die folgenden Schritte aufweist:
- Bestimmen eines Regelungsmodells, wobei das Regelungsmodell auf einem Mehrkörpersystem basiert, welches die erste Exoskeletteinheit, die zweite Exoskeletteinheit; und den ersten und/oder zweiten Körperteil, modelliert; und
- Ansteuern der ersten Exoskeletteinheit und/oder der zweiten Exoskeletteinheit basierend auf dem Regelungsmodell.

Gemäß einem weiteren Aspekt der vorliegenden Offenbarung wird vorgeschlagen, ein Computerprogramm bzw. Computerprogrammprodukt mit Programmcode bereitzustellen, der dazu ausgelegt ist, ein solches Verfahren auszuführen, wenn das Computerprogrammprodukt auf einer Datenverarbeitungseinrichtung ausgeführt wird.

Die vorgeschlagene Lösung ist insbesondere dann vorteilhaft, wenn mehrere Nutzer, welche jeweils ein Exoskelett bzw. eine Exoskeletteinheit tragen, zusammenarbeiten. Anstatt, dass sich etwaige Fehler, welcher sich bei der individuellen Ansteuerung der unterschiedlichen Exoskeletteinheiten durch die jeweiligen Nutzer ergeben im Rahmen einer Fehlerfortpflanzung addieren, kann stattdessen eine ganzheitliche Regelung basierend auf dem Mehrkörpersystem erfolgen. Beispielsweise kann eine ausgeglichene Lastverteilung zwischen mehreren beteiligten Personen und deren Exoskeletteinheiten erreicht werden, optional unter Berücksichtigung von Randbedingungen wie der Ladezustände der Exoskeletteinheiten.

Die Erfinder haben erkannt, dass anstatt wie im Stand der Technik eine Sensorik zur Erfassung der Bewegungswünsche der Nutzer aufwendig zu verbessern und somit lediglich eine präzisere Steuerung jeweils einzelner Exoskeletteinheiten zu ermöglichen, durch eine ganzheitliche Betrachtung und Ansteuerung als Mehrkörpersystem das Zusammenwirken mehrerer Exoskeletteinheiten weiter verbessert werden kann.

Das Exoskelett-System weist eine erste Exoskeletteinheit zur Unterstützung eines ersten Körperteils und eine zweite Exoskeletteinheit zur Unterstützung eines zweiten Körperteils auf. Beispielsweise kann es sich bei der ersten Exoskeletteinheit um das Exoskelett eines ersten Nutzers und bei der zweiten Exoskeletteinheit um das Exoskelett eines zweiten Nutzers handeln. Die erste Exoskeletteinheit und die zweite Exoskeletteinheit sind dabei vorzugsweise mechanisch voneinander entkoppelt. Mit anderen Worten können die erste Exoskeletteinheit und die zweite Exoskeletteinheit separate Exoskeletteinheiten sein. Die Exoskeletteinheiten sind insbesondere nicht mittelbar oder unmittelbar durch weitere Bauteile miteinander gekoppelt. Insbesondere erfolgt keine Kraftübertragung durch eine mechanische Kopplung. Damit wird ein hohes Maß an Flexibilität gewährleistet.

Nichtsdestotrotz wird eine übergreifende Steuereinrichtung vorgeschlagen, die dazu ausgebildet ist, das erste Exoskelettmodul und/oder das zweite Exoskelettmodul basierend auf einem (adaptiven) Regelungsmodell anzusteuern, wobei das Regelungsmodell auf einem Mehrkörpersystem basiert, welches sowohl die erste Exoskeletteinheit als auch die zweite Exoskeletteinheit und vorzugsweise auch den ersten und/oder zweiten Körperteil zumindest teilweise modelliert. Indem die mechanisch voneinander entkoppelte erste und zweite Exoskeletteinheit als Bestandteile eines gemeinsamen Mehrkörpersystems modelliert werden, kann bei der Ansteuerung der ersten und/oder zweiten Exoskeletteinheit jeweils der Zustand der anderen Einheit berücksichtigt werden. Optional wird die Ansteuerung ferner dadurch verbessert, dass auch der erste und/oder zweite Körperteil in dem Mehrkörpersystem, auf welchem das Regelungsmodell zur Ansteuerung basiert, berücksichtigt werden. Mit anderen Worten können der erste und/oder der zweite Körperteil zusammen mit der ersten Exoskeletteinheit und der zweiten Exoskeletteinheit einen Hybrid darstellen, welcher der Ansteuerung im Rahmen einer modellbasierten Regelung zugrunde gelegt wird.

Im Rahmen der vorliegenden Offenbarung ist unter Exoskelett-System ein körpergetragenes, künstliches Unterstützungssystem zur Unterstützung bei mechanischen Tätigkeiten eines oder mehrerer Nutzer zu verstehen. Im Rahmen der vorliegenden Offenbarung ist eine Exoskeletteinheit nicht ausschließlich auf eine außenliegende Exoskeletteinheit beschränkt, sondern kann sich auch auf eine (zumindest teilweise) implantierbare Exoskeletteinheit beziehen, welche auch als Endoskeletteinheit bezeichnet werden kann. Ein Beispiel für eine implantierte Exoskeletteinheit wäre demnach ein künstliches motorisiertes bzw. durch einen Aktor betätigtes Gelenk..Im Rahmen der vorliegenden Offenbarung ist ein Exoskelett-System somit als Exo- und/oder Endoskelett-System mit einer ersten Exo- und/oder Endoskeletteinheit zur Unterstützung eines ersten Körperteils und einer zweiten Exo- und/oder Endoskeletteinheit zur Unterstützung eines zweiten Körperteils zu verstehen, wobei das System und die zugehörigen Einheiten verkürzt als Exoskelett-System und Exoskeletteinheit bezeichnet werden.

Im Rahmen der vorliegenden Offenbarung ist unter Steuereinrichtung eine Steuer- und/oder Regeleinrichtung (control unit) zu verstehen. Somit kann eine geschlossene oder offene Regelschleife vorgesehen sein.

Die erste Exoskeletteinheit kann einen Aktor zur Unterstützung des ersten Körperteils aufweisen. Die zweite Exoskeletteinheit kann einen Aktor zur Unterstützung des zweiten Körperteils aufweisen. Die Steuereinrichtung kann dazu ausgebildet sein, den Aktor der ersten Exoskeletteinheit und/oder den Aktor der zweiten Exoskeletteinheit basierend auf dem Regelungsmodell basierend auf dem Mehrkörpersystem anzusteuern. Beispielsweise kann der Aktor ein motorisches Gelenk zur Kraftunterstützung sein.

Der erste Körperteil, welcher von der ersten Exoskeletteinheit unterstützt wird, ist ein Körperteil eines ersten Nutzers. Der zweite Körperteil, welcher von der zweiten Exoskeletteinheit unterstützt wird, ist ein Körperteil eines zweiten Nutzers. Ein Vorteil dieser Ausgestaltung besteht darin, dass ein erster Nutzer und ein zweiter Nutzer mit ihren jeweiligen Exoskeletteinheiten zusammenarbeiten können. Die Unterstützung durch die jeweiligen Exoskeletteinheiten ist dadurch, dass beide Einheiten Teil desselben Mehrkörpersystems und Regelungsmodells sind, vorteilhaft aufeinander abgestimmt werden. Alternativ können die erste Exoskeletteinheit und die zweite Exoskeletteinheit unterschiedliche Körperteile des gleichen Nutzers unterstützen. Beispielsweise kann eine selektive Unterstützung einzelner Körperteile wie beispielsweise des linken Knies und des rechten Ellenbogens oder der Wirbelsäule erfolgen, ohne dass die erste Exoskeletteinheit und die zweite Exoskeletteinheit mechanisch miteinander gekoppelt sind. Somit kann eine zielgerichtete und dennoch aufeinander abgestimmte Unterstützung einzelner Körperteile erfolgen. Gleichzeitig kann auf unnötige Unterstützung dazwischenliegender Körperteile und/oder Gelenke, welche nicht beeinträchtigt sind, (wie dies beispielsweise bei einem Ganzkörper-Exoskelett erfolgen würde) verzichtet werden. Vorzugsweise kann damit das Gewicht reduziert werden und eine Bewegungsfreiheit der nicht unterstützten Körperteile des Nutzers erhalten werden.

In einer Ausführungsform kann die erste Exoskeletteinheit einen ersten Aktor zur Unterstützung des ersten Körperteils aufweisen und die zweite Exoskeletteinheit einen zweiten Aktor zur Unterstützung des zweiten Körperteils aufweisen. Die Steuereinrichtung kann dazu ausgebildet sein, den ersten Aktor der ersten Exoskeletteinheit und/oder den zweiten Aktor der zweiten Exoskeletteinheit basierend auf dem Regelungsmodell anzusteuern.

Vorzugsweise kann die Steuereinrichtung dazu ausgebildet sein, das Regelungsmodell mit dem Mehrkörpersystem selbstständig zu erstellen, basierend auf Informationen über die erste Exoskeletteinheit, die zweite Exoskeletteinheit und den ersten und/oder zweiten Körperteil. Derartige Information kann über eine Schnittstelle bereitgestellt werden oder alternativ über Sensorik erfasst werden. Beispielsweise können die erste und/oder zweite Exoskeletteinheit eine Kennung aufweisen, basierend auf welcher ein Modell dieser Einheiten aus einer Datenbank bezogen werden kann. Entsprechend können Modellinformationen bezüglich des Nutzers, wie beispielsweise eine Körpergröße, Gewicht oder Armlänge über eine Schnittstelle oder Sensorik erfasst werden. Ein Vorteil dieser Lösung besteht darin, dass die Ansteuerung jeweils flexibel auf die eingesetzten Exoskeletteinheiten und den ersten und/oder zweiten Körperteil angepasst werden kann. Es versteht sich, dass unter Erstellen des Regelungsmodells mit dem Mehrkörpersystems auch eine Anpassung bzw. Parametrierung eines bereits hinterlegten Regelungsmodells verstanden werden kann.

Vorzugsweise kann das Exoskelett-System ferner einen Sensor zur Erfassung einer Relativposition zwischen der ersten Exoskeletteinheit und der zweiten Exoskeletteinheit aufweisen. Ein Vorteil dieser Ausgestaltung besteht darin, dass die Ansteuerung weiter verbessert werden kann, indem die Betätigung der Exoskeletteinheiten genauer aufeinander abgestimmt werden kann. Es versteht sich, dass auch jeweils eine Absolutposition erfasst werden kann und die Relativposition der ersten Exoskeletteinheit und der zweiten Exoskeletteinheit aus einer Differenz der Absolutpositionen berechnet werden kann. Die Position kann hierbei eine Lage und/oder Orientierung der Einheiten umfassen.

Vorzugsweise kann die Steuereinrichtung dazu ausgebildet sein, das Regelungsmodell ferner adaptiv basierend auf wenigstens einem Kontextparameter zu erstellen (bzw. anzupassen). Ein Vorteil dieser Ausgestaltung besteht darin, dass neben den Elementen des Mehrkörpersystems auch der Kontext, in welchem das System agieren soll, berücksichtigt werden kann.

Vorzugsweise kann die Steuereinrichtung dazu ausgebildet sein, das Regelungsmodell adaptiv basierend auf einem physiologischen Zustand eines Nutzers der ersten und/oder zweiten Exoskeletteinheit zu erstellen (bzw. anzupassen). Unter einem physiologischen Zustand des Nutzers kann beispielsweise ein Gesundheitszustand verstanden werden. Der physiologische zustand kann auf einem oder mehreren von Herzfrequenz, Atemfrequenz, Sauerstoffsättigung, Körpertemperatur, Kinetik, Kinematik, Flüssigkeitshaushalt, Muskeltonus und/oder Muskelkrampfindikator basieren. Unter einem physiologischen Zustand des Nutzers ist jedoch nicht ein Bewegungswunsch des Nutzers zur Steuerung des Exoskelett-Systems zu verstehen. Wenn beispielsweise der physiologische Zustand des Nutzers auf einen Krampfanfall hindeutet, ist anzunehmen, dass der Nutzer unwillkürliche Bewegungen ausführt bzw. ausführen wird, welchen die Exoskeletteinheit vorzugsweise nicht folgen oder diese gar verstärken soll. Ferner kann eine erhöhte Herz- und/oder Atemfrequenz auf eine Überanstrengung des Nutzers hindeuten, so dass ein Kraftverstärkungsverhalten der Exoskeletteinheit angepasst werden kann, um einer Überanstrengung entgegenzuwirken. In einem weiteren Ausführungsbeispiel kann der physiologische Zustand des Nutzers auch darauf hindeuten, dass der Nutzer medizinische Hilfe benötigt, so dass das Regelungsmodell adaptiv dahingehend angepasst werden kann, dass es beispielsweise den Nutzer beim Übergang in einen sicheren Zustand wie beispielsweise die stabile Seitenlage unterstützt.

Vorzugsweise kann die Steuereinrichtung ferner dazu ausgebildet sein, das Regelungsmodell adaptiv basierend auf wenigstens einem Umweltparameter zu erstellen bzw. anzupassen. Beispielhafte Umweltparameter sind die Umgebungstemperatur, Luft, Geräusche und dergleichen. Beispielsweise kann bei erhöhten Temperaturen eine höhere Unterstützung bereitgestellt werden, um eine Überanstrengung des Nutzers zu verhindern.

Vorzugsweise kann die Steuereinrichtung dazu ausgebildet sein, das Regelungsmodell adaptiv basierend auf einer zu lösenden Aufgabe zu erstellen bzw. anzupassen. Ein Vorteil dieser Ausgestaltung besteht in einer verbesserten Ansteuerung der ersten und/oder zweiten Exoskeletteinheit vor dem Hintergrund der zu lösenden Aufgabe. Insbesondere bei gemeinschaftlich durch Zusammenwirken der Elemente des Mehrkörpersystems zu lösenden Aufgabe kann demnach ein verbessertes Ergebnis erzielt werden.

Ein beispielhaftes Szenario für eine gemeinschaftlich zu lösende Aufgabe ist das Balancieren eines Balkens, wobei die Regelung derart erfolgt, dass der Balken gerade gehalten wird. Eine Aufgabe kann als geometrische Positionierung und/oder Lageänderung unter zeitlicher Abfolge von Bewegungen beschrieben werden. Eine Aufgabe kann über eine Schnittstelle bereitgestellt werden. Die Aufgabe kann ferner als Randbedingung für die Modellierung herangezogen werden. Wenn beispielsweise mit empfindlichen Elementen hantiert wird, kann eine Obergrenze für zulässige Beschleunigungswerte definiert sein.

Vorzugsweise kann die Steuereinrichtung dazu ausgebildet sein, ein Steuersignal zur Ansteuerung der ersten und/oder zweiten Exoskeletteinheit, welches durch eine Interaktion eines Nutzers mit der ersten und/oder zweiten Exoskeletteinheit hervorgerufen wird, in Abhängigkeit von der zu lösenden Aufgabe und/oder basierend auf einem Zustand des Mehrkörpersystems zu korrigieren bzw. anzupassen. Ein Vorteil dieser Ausgestaltung besteht in einer präziserer Regelung. Wenn beispielsweise die Aufgabe darin besteht, einen Balken in horizontaler Lage zu tragen, kann ein zu starkes Anheben des Balkens durch einen Nutzer einer Exoskeletteinheit gedämpft werden, so dass der Balken lediglich derart angehoben wird, dass er sich im Gleichgewicht befindet, jedoch nicht darüber hinaus.

Vorzugsweise kann die Steuereinheit dazu ausgebildet sein, eine technische Integrität der ersten und/oder zweiten Exoskeletteinheit zu bestimmen und das Regelungsmodell für eine adaptiv basierend auf der technischen Integrität zu erstellen bzw. anzupassen. Ein Vorteil dieser Ausgestaltung besteht darin, dass beispielsweise ausfallende Komponenten oder Komponenten, welche in ihrer Funktion eingeschränkt sind, in der Regelung berücksichtigt bzw. kompensiert werden können. Wenn beispielsweise ein Aktor einer Exoskeletteinheit durch einen technischen Defekt oder durch eine äußere Einwirkung wie beispielsweise durch einen Schlag oder Fremdkörper, wie eine Kugel ausfällt, so kann der Zustand einer weiteren Exoskeletteinheit dahingehend in der Regelung angepasst werden, um den Ausfall oder eine eingeschränkte Funktionsfähigkeit einer anderen Exoskeletteinheit zu kompensieren.

Vorzugsweise kann die Steuereinheit ferner dazu ausgebildet sein, die erste und/oder zweite Exoskeletteinheit (in Abhängigkeit von einem Parameter) wahlweise derart anzusteuern, um den Nutzer der jeweiligen Exoskeletteinheit zu unterstützen oder zu übersteuern. Insbesondere kann die Steuereinrichtung dazu ausgebildet sein, den Nutzer der jeweiligen Exoskeletteinheit zu übersteuern und die erste und/oder zweite Exoskeletteinheit derart anzusteuern, dass das Mehrkörpersystem in einen sicheren Zustand überführt wird. Beispielsweise kann ein Nutzer, welcher einen Krampfanfall erleidet oder welcher verwundet wird, beim Übergang in einen sicheren Zustand unterstützt werden, beispielsweise statt zu stürzen langsam zu Boden geleitet werden. In diesem Kontext kann der Mensch als biegeschlaffes Bauteil betrachtet werden, welcher durch die erste und/oder zweite Exoskeletteinheit geführt wird. Alternativ kann die Exoskeletteinheit den Nutzer aus einer Gefahrenzone entfernen, beispielsweise bei einer Bewegung aus der Gefahrenzone unterstützen oder diese durchführen. Unter einem sicheren Zustand kann ein geometrisch definierter Zustand verstanden werden, welcher ein Gefährdungspotential für den Nutzer und/oder andere Nutzer oder seine Umgebung mindert.

Optional kann die Steuereinheit als verteilte Steuereinheit ausgebildet sein, welche insbesondere über mehrere Exoskeletteinheiten verteilt sein kann. Ein Vorteil dieser Ausgestaltung besteht in einer dezentralen Steuerung. Insbesondere kann die versteilte Steuereinheit derart ausgestaltet sein, dass auch eine Untergruppe bzw. ein Teil der verteilten Steuereinheit die Gesamtfunktion aufrechterhalten kann. Ein Vorteil dieser Ausgestaltung besteht darin, dass für den Ausfall einer Komponente Redundanz gegeben ist und die Sicherheit erhöht wird. Darüber hinaus kann durch eine verteilte bzw. modulare Steuereinheit ein verbessertes Energiemanagement ermöglicht werden. Beispielsweise kann der Datenaustausch zwischen den jeweiligen Exoskeletteinheiten reduziert werden und auch eine lokale Stromversorgung einer jeweils einer Exoskeletteinheit zugeordneten Steuereinheit erfolgen, so dass nicht eine einzige Exoskeletteinheit die Versorgung der Steuerung des Gesamtsystems sicherstellen muss.

Vorzugsweise können die erste Exoskeletteinheit und die zweite Exoskeletteinheit eine Kommunikationseinrichtung zur Kommunikation mit Steuereinrichtung aufweisen.

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den beigefügten Zeichnungen dargestellt und werden in der nachfolgenden Beschreibung näher erläutert.
- Fig. 1: zeigt eine Ausführungsform eines Exoskelett-Systems in einem ersten Anwendungsszenario;
- Fig. 2: zeigt ein Diagramm mit Komponenten eines Mehrkörpersystems;
- Fig. 3: zeigt eine beispielhafte Modellierung eines menschlichen Körpers als Mehrkörpersystem;
- Fig. 4: zeigt eine weitere Ausführungsform eines Exoskelett-Systems;
- Fig. 5: zeigt ein Blockdiagramm mit Komponenten und Einflussfaktoren für ein Regelungsmodell als Basis für die Ansteuerung der ersten und/oder zweiten Exoskeletteinheit durch die Steuereinrichtung;
- Fig. 6: zeigt ein weiteres Anwendungsszenario eines Exoskelett-Systems;
- Fig. 7: zeigt ein weiteres Anwendungsszenario eines Exoskelett-Systems; und
- Fig. 8: zeigt ein Flussdiagramm eines Verfahrens zur Ansteuerung einer ersten und/oder zweiten Exoskeletteinheit eines Exoskelett-Systems;

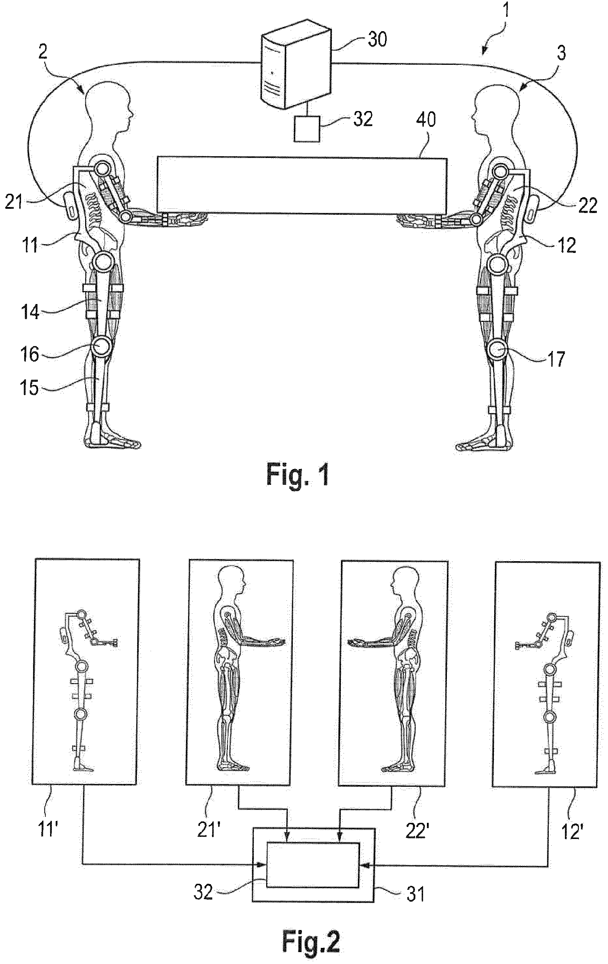

Fig. 1 zeigt eine Ausführungsform eines Exoskelett-Systems mit einer Steuereinrichtung gemäß der vorliegenden Offenbarung. Das Exoskelett-System ist dabei in seiner Gesamtheit mit Bezugszeichen 1 bezeichnet.

Das Exoskelett-System 1 weist eine erste Exoskeletteinheit 11 zur Unterstützung eines ersten Körperteils 21 und eine zweite Exoskeletteinheit 12 zur Unterstützung eines zweiten Körperteils 22 auf. Im vorliegenden Ausführungsbeispiel handelt es sich bei der ersten Exoskeletteinheit 11 und der zweiten Exoskeletteinheit 12 jeweils um Ganzkörper-Exoskelette, welche den gesamten Bewegungsapparat des ersten Nutzers 2 bzw. des zweiten Nutzers 3 von den Beinen über die Wirbelsäule bis zu den Armen unterstützen.

Das Exoskelett-System 1 weist ferner eine Steuereinrichtung 30 auf. Die Steuereinrichtung 30 ist dazu ausgebildet, die erste Exoskeletteinheit 11 und/oder die zweite Exoskeletteinheit 12 eines Exoskelett-Systems 1 basierend auf einem Regelungsmodell anzusteuern, wobei das Regelungsmodell auf einem Mehrkörpersystem basiert. Das Mehrkörpersystem umfasst bzw. modelliert die erste Exoskeletteinheit 11 und die zweite Exoskeletteinheit 12. Ferner kann das Mehrkörpersystem zusätzlich den ersten und/oder zweiten Körperteil 21, 22 berücksichtigen und modellieren. Die erste Exoskeletteinheit 11 und die zweite Exoskeletteinheit 12 sind mechanisch voneinander entkoppelt. Im vorliegenden Ausführungsbeispiel handelt es sich um zwei getrennte Ganzkörper-Exoskelette.

Die Exoskeletteinheit 11 kann aus wenigstens zwei Exoskelettelementen 14, 15 bestehen, welche mittels eines Aktors 16 miteinander verbunden sind. Im vorliegenden, nichtlimitierenden Ausführungsbeispiel ist dies beispielhaft als Beinunterstützung des Nutzers 2 dargestellt, wobei das erste Exoskelettelement 14 mittels einer ersten mechanischen Schnittstelle bzw. Befestigungsmitteln am Oberschenkel des Nutzers befestigt ist und das zweite Exoskelettelement 15 mittels einer zweiten mechanischen Schnittstelle bzw. Befestigungsmitteln am Unterschenkel des Nutzers befestigt ist. Somit kann der Aktor 16 eine Bewegung des Beines des Nutzers 2 unterstützen, beispielsweise beim Gehen, Rennen, oder ermüdungsfreien Stehen. Entsprechendes gilt für die Unterstützung der Arme und/oder der Wirbelsäule des Nutzers. Es versteht sich, dass eine Exoskeletteinheit 11, 12 nicht notwendigerweise ein Ganzkörper-Exoskelett sein muss, sondern auch selektiv einzelne Körperteile des Nutzers unterstützen kann.

Um die erste und/oder zweite Exoskeletteinheit 11, 12 anzusteuern, kann eine kabelgebundene oder drahtlose Kommunikationsverbindung mit der ersten und/oder zweiten Exoskeletteinheit 11, 12 bestehen. Hierfür können die Exoskeletteinheiten 11, 12 und die Steuereinrichtung 30 entsprechende Kommunikationseinrichtungen aufweisen.

Im vorliegenden beispielhaft abgebildeten Szenario kann die Aufgabe des ersten und zweiten Nutzers 2, 3 darin besehen, einen schweren Gegenstand 40 zu transportieren und dabei perfekt ausnivelliert in der Waagrechten zu halten. Dies ist bereits ohne Unterstützung durch Exoskelette eine schwierige Aufgabe, insbesondere beim Treppensteigen. Konventionelle Exoskelette können den ersten Nutzer 2 und den zweiten Nutzer 3 jeweils getrennt voneinander bei der mechanischen Last unterstützen. Die Nutzer müssen sich präzise miteinander abstimmen. Allerdings kann eine unpräzise Ansteuerung der jeweiligen separaten Exoskelette das Ausbalancieren des Gegenstands 40 zusätzlich erschweren. Selbst wenn baugleiche Exoskelette eingesetzt werden, so unterscheidet sich doch zumindest die Kinematik und Kinetik der Körper des ersten Nutzers 2 und des zweiten Nutzers 3. Indem die erste Exoskeletteinheit 11 und die zweite Exoskeletteinheit 12 mechanisch voneinander entkoppelt sind, ist es auch nicht möglich, mittels einer mechanischen Kopplung einen Ausgleich zu schaffen.

Gemäß der vorliegenden Offenbarung wird daher vorgeschlagen, eine Steuereinrichtung 30 bereitzustellen, wobei die Steuereinrichtung dazu ausgebildet ist, die erste Exoskeletteinheit 11 und/oder die zweite Exoskeletteinheit 12 basierend auf einem Regelungsmodell anzusteuern, wobei das Regelungsmodell auf einem Mehrkörpersystem basiert, welches die erste Exoskeletteinheit 11, die zweite Exoskeletteinheit 12 und vorzugsweise den ersten und/oder zweiten Körperteil 21, 22 modelliert. Indem die Regelung basierend auf diesem Mehrkörpersystem basiert kann somit eine präzisere Ansteuerung der Exoskeletteinheiten 11, 12 erfolgen.

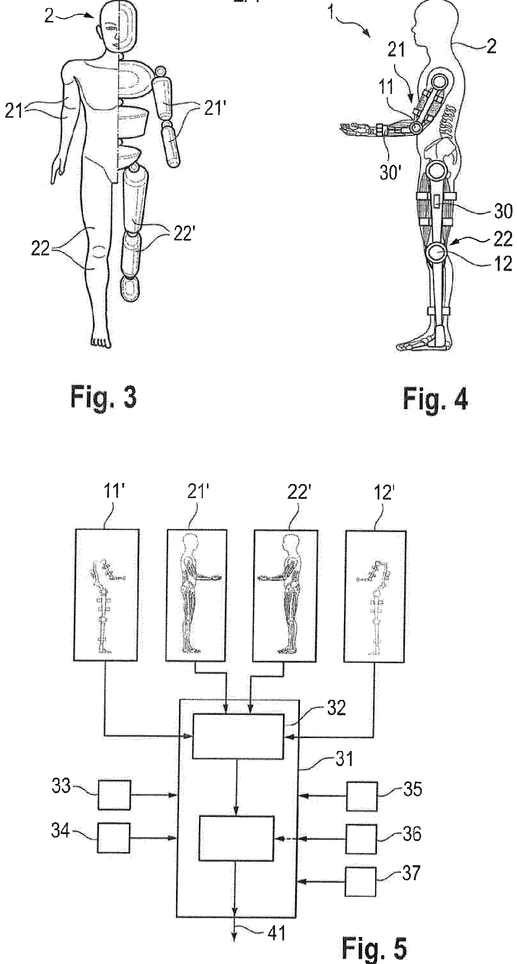

Fig. 3 illustriert beispielhaft das Erstellen eines Regelungsmodells 31 auf Basis eines Mehrkörpersystems 32, welches auf Information 11' über die erste Exoskeletteinheit 11, Information 12' über die zweite Exoskeletteinheit 12 und Information 21' bzw. 22' über den ersten und/oder zweiten Körperteil 21, 22 basiert. Die Information kann der Steuereinrichtung 30 über eine Schnittstelle zur Verfügung gestellt werden. Alternativ können einer oder mehrere Sensoren vorgesehen sein, um die erforderliche Informationen zu erfassen und der Steuereinrichtung 30 zur Verfügung zu stellen. Dabei ist es auch möglich, dass Sensoren der ersten und/oder zweiten Exoskeletteinheit 11, 12 Information zur Modellierung des ersten und/oder zweiten Körperteils bereitstellen. Beispielsweise kann mittels Bewegungssensoren, wie Beschleunigungssensoren oder Gyroskopen, Information über eine Trägheit oder Kinetik des ersten und/oder zweiten Körperteils gewonnen werden. Ferner kann durch Adaption einer Exoskeletteinheit 11, 12, beispielsweise auf eine Länge des zu unterstützenden Körperteils, zusätzliche Information über den zu unterstützenden Körperteil 21, 22 gewonnen werden.

Wie in Fig. 1 gezeigt, kann das Exoskelett-System 1 ferner einen oder mehrere Sensoren 32 zur Erfassung einer Relativposition zwischen der ersten Exoskeletteinheit 11 und der zweiten Exoskeletteinheit 12 aufweisen. Beispielsweise kann die Relativposition mittels bekannter Verfahren wie Triangulation und Laufzeitmessung von drahtlos übertragenen Kommunikationssignalen der ersten Exoskeletteinheit 11 und der zweiten Exoskeletteinheit 12 zum Sensor 32 erfolgen, wobei auch andere Verfahren zur Positionsbestimmung eingesetzt werden können.

Fig. 4 zeigt eine schematische Darstellung eines menschlichen Körpers 2 mit mehreren Körperteilen 21, 22, wobei beispielhaft auf den Arm als ersten Körperteil 21 und das Bein als zweiten Körperteil 22 Bezug genommen wird.

Fig 5 zeigt eine weitere Ausführungsform eines Exoskelett-Systems 1 gemäß einer weiteren Ausführungsform der vorliegenden Offenbarung. Das Exoskelett-System 1 weist erneut eine erste Exoskeletteinheit 11 zur Unterstützung eines ersten Körperteils 21, eine zweite Exoskeletteinheit 12 zur Unterstützung eines zweiten Körperteils 22 sowie eine Steuereinrichtung 30 auf. Im vorliegenden Fall handelt es sich bei dem ersten Körperteil 21 und dem zweiten Körperteil 22 jedoch, im Gegensatz zu Fig. 1, um Körperteile des gleichen Nutzers 2. Dies kann beispielsweise dann vorteilhaft sein, wenn ein Ganzkörper-Exoskelett nicht gewünscht oder nicht erforderlich ist und lediglich die selektive Unterstützung einzelner Körperteile des gleichen Nutzers 2 gewünscht ist. Im vorliegenden Beispiel wird beispielsweise ein Ellenbogengelenk sowie ein Kniegelenk, d.h. ein Arm als erster Körperteil 21 durch die erste Exoskeletteinheit 1 und ein Bein als zweiter Körperteil 22 durch die zweite Exoskeletteinheit 2 unterstützt.

Optional kann die Steuereinrichtung 30 dabei als verteilte Steuereinrichtung ausgebildet sein, wobei zumindest einem Teil der Funktionen in dem Element 30 und ein Teil der Funktionen im Element 30' realisiert ist. Ein weiterer Vorteil dieser Ausgestaltung besteht darin, dass durch eine verteilte Steuereinheit Redundanz geschaffen werden kann und somit die Ausfallsicherheit erhöht wird.

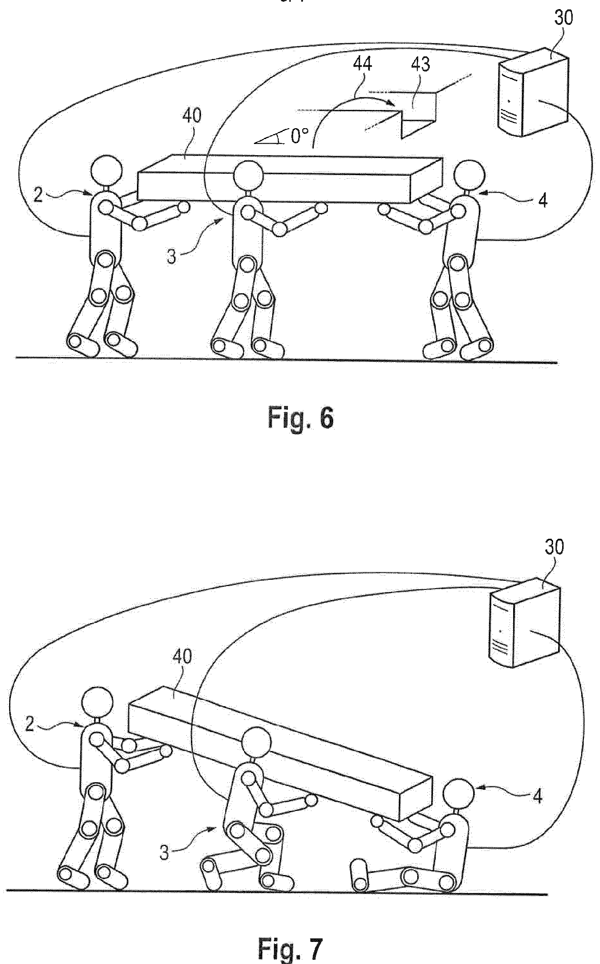

Fig. 6 zeigt ein Blockdiagramm, welches mehrere optionale vorteilhafte Weiterbildungen der Steuereinrichtung 30 bzw. deren Regelungsmodells 31 aufzeigt. Zur Vermeidung von Wiederholungen wird daher lediglich auf Unterschiede gegenüber Fig. 3 eingegangen. Vorzugsweise ist die Steuereinrichtung 30 dazu ausgebildet, das Regelungsmodell 31 adaptiv basierend auf wenigstens einem Kontextparameter 33 zu erstellen bzw. anzupassen. Der Kontextparameter 33 kann in einem optionalen Sensor bereitgestellt werden oder über eine Schnittstelle zur Verfügung gestellt werden. Beispielsweise kann der Kontextparameter die Lage der Module zueinander beschreiben oder präzisieren. Optional kann die Steuereinrichtung ferner dazu ausgebildet sein, das Regelungsmodell adaptiv basierend auf einem physiologischen Zustand 34 eines Nutzers der ersten und/oder zweiten Exoskeletteinheit zu erstellen. Beispielsweise kann hierfür ein Sensor zur Erfassung eines physiologischen Parameters, wie beispielsweise der Herzfrequenz oder Atemfrequenz vorgesehen sein. Alternativ oder zusätzlich kann auch die Hautleitfähigkeit gemessen werden. Beispielsweise ist Schwitzen ein guter Indikator für Stress. Vorzugsweise kann die Regelung somit dahingehend angepasst werden, dass der Stress des Nutzers gemindert wird. Beispielsweise kann die Unterstützung erhöht werden oder, falls das Exoskelett Bewegungen mit zu hoher Geschwindigkeit oder zu feinfühlig ausführt, optional eine Dämpfung im Regelungsmodell vorgesehen werden.

Optional kann die Steuereinrichtung dazu ausgebildet sein, das Regelungsmodell adaptiv basierend auf wenigstens einem Umweltparameter 35 zu erstellen. Der Umweltparameter kann mittels eines Sensors erfasst werden oder über eine Schnittstelle zur Verfügung gestellt werden. Beispielsweise kann bei höheren Temperaturen und einer zu erwartenden höheren Belastung des Nutzers eine höhere Unterstützungsstufe gewählt werden, wohingegen bei vorteilhaften Bedingungen eine geringere Unterstützungsstufe gewählt werden kann, um beispielsweise den Leistungsverbrauch zu reduzieren.

Optional kann die Steuereinrichtung dazu ausgebildet sein, das Regelungsmodell adaptiv basierend auf einer zu lösenden Aufgabe 36 zu erstellen. Optional kann die Aufgabe 36 aus einer oder mehreren Teilaufgaben bestehen bzw. in solche zerlegt werden. Beispielsweise kann es sich um verschiedene Teilaufgaben für die erste bzw. zweite Exoskeletteinheit handeln. Die Steuereinrichtung kann basierend auf dem Mehrkörpersystem und der durch das Mehrkörpersystem durchzuführenden Aufgabe optional Parameter zur Ansteuerung der ersten und/oder zweiten Exoskeletteinheit berechnen bzw. optional eine Parameteroptimierung durchführen. Bezugnehmend auf Fig. 1 kann die Aufgabe beispielsweise darin bestehen, einen Gegenstand bzw. eine Last 40 in einem ausbalancierten horizontalen Zustand zu halten. Somit kann das Regelungsmodell diese Aufgabe im Regelungsmodell 31 der Steuereinrichtung 30 berücksichtigen und durch den ersten und/oder zweiten Nutzer bereitgestellte Steuersignale in eine vorteilhafte Ansteuerung der ersten und/oder zweiten Exoskeletteinheit umsetzen, um diese Aufgabe (bestmöglich) zu lösen.

Mit anderen Worten kann die Steuereinrichtung 30 vorzugsweise dazu ausgebildet sein, ein Steuersignal 41 zur Ansteuerung der ersten und/oder zweiten Exoskeletteinheit 11, 12, welche durch eine Interaktion eines Nutzers 2, 3 mit der ersten und/oder zweiten Exoskeletteinheit 11, 12 hervorgerufen wird, in Abhängigkeit von der zu lösenden Aufgabe 36 und/oder basierend auf einem Zustand des Mehrkörpersystems 32 zu korrigieren bzw. anzupassen.

Optional kann die Steuereinheit ferner dazu ausgebildet sein, eine technische Integrität der ersten und/oder zweiten Exoskeletteinheit 11, 12 zu bestimmen und das Regelungsmodell 31 ferner adaptiv basierend auf der technischen Integrität zu erstellen bzw. anzupassen. Wenn beispielsweise festgestellt wird, dass einer der Aktoren des Exoskelett-Systems zu überhitzen droht, so kann die Regelung eine Zustandsänderung herbeiführen, welche die Belastung dieses Aktors reduziert und beispielsweise eine erforderliche mechanische Unterstützung durch einen oder mehrere andere Aktoren bereitstellt. Beispielsweise kann, wenn ein Aktor an einem Ellenbogengelenk zu sehr beansprucht ist, ggf. eine Bewegung aus dem Beinbereich unterstützen.

Fig. 7 zeigt ein weiteres Anwendungsszenario, bei welchem ein erster Nutzer 2, ein zweiter Nutzer 3 und ein dritter Nutzer 4 gemeinsam eine Last 40 ausbalanciert tragen wollen und sodann koordiniert in eine Ausnehmung 43 ablegen wollen, wie das durch den Pfeil 44 beispielhaft dargestellt ist. Die Aufgabe besteht also in einem koordinierten Tragen und Ablegen einer Last. Ein Vorteil der vorgeschlagenen Lösung besteht darin, dass die Steuereinrichtung 30 die beteiligten Exoskeletteinheiten der Nutzer 2, 3 und 4 derart koordiniert ansteuern kann, dass beispielsweise eine lastgleiche Verteilung möglich ist, wobei die Last zu gleichen Teilen auf den ersten, zweiten und dritten Nutzer 2, 3, 4 verteilt ist. Es versteht sich, dass in Abhängigkeit von der Leistungsfähigkeit der jeweiligen Nutzer und deren Exoskeletteinheiten eine anderweitige Verteilung möglich ist. Optional kann auch ein Ladezustand der jeweiligen Exoskeletteinheiten und/oder deren technische Integrität berücksichtigt werden. Ein weiterer Vorteil bei der vorgeschlagenen Lösung besteht darin, dass das Ablegen der schweren Last dank des gemeinsamen Regelungsmodells, welches auf einem Mehrkörpersystem basiert, synchron erfolgen kann, so dass etwaige Beschädigungen beim Einlegen in eine enge Öffnung 43 vermieden oder zumindest reduziert werden können.

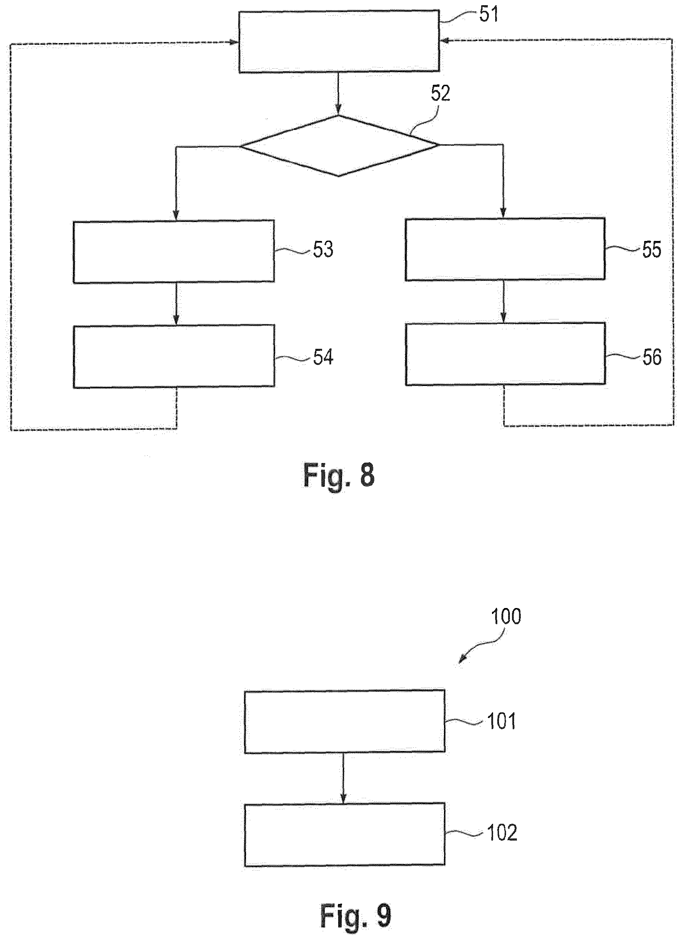

Fig. 8 zeigt ein abgewandeltes Szenario, bei welchem der Nutzer 4 unbeabsichtigt gestürzt ist. Die Steuereinrichtung 30 ist hierbei dazu ausgebildet, das Regelungsmodell adaptiv basierend auf der zu lösenden Aufgabe anzusteuern, jedoch auch die zu lösende Aufgabe anzupassen. Im vorliegenden Fall kann die zu lösende angepasste Aufgabe demnach darin bestehen, den Nutzer 4 vor Verletzungen zu schützen.

Bezugnehmend auf Fig. 7 kann die Steuereinrichtung dazu ausgebildet sein, die erste und/oder zweite oder auch weitere Exoskeletteinheiten wahlweise derart anzusteuern, um den Nutzer der jeweiligen Exoskeletteinheit zu unterstützen oder zu übersteuern. Im vorliegenden Fall kann es sinnvoll sein, die Nutzer 2, 3, 4 der jeweiligen Exoskeletteinheiten zu übersteuern und die Exoskeletteinheiten derart anzusteuern, dass das Mehrkörpersystem in einen sicheren Zustand überführt wird. Beispielsweise können die Exoskelette 11, 12 des ersten und zweiten Nutzers 2, 3 derart angesteuert werden, dass die Last nicht vor Schreck fallengelassen wird und somit der dritte Nutzer 4 Schaden nimmt, sondern zusätzliche Leistung für die Aktoren der Exoskelette bereitgestellt wird, um die mangelnde Unterstützung durch den dritten Nutzer 4 zu kompensieren und diesen vor Schaden zu bewahren.

Fig. 8 verdeutlicht diesen Ablauf nochmals. In Schritt 51 wird der Zustand des Mehrkörpersystems überwacht, wobei in Schritt 52 eine Entscheidung getroffen wird, ob die erste und/oder zweite Exoskeletteinheit 11, 12 derart angesteuert werden, dass der Nutzer der jeweiligen Exoskeletteinheit unterstützt wird, in Schritt 53, um beispielsweise die ursprüngliche Aufgabe in Schritt 54 zu lösen. Alternativ kann die erste und/oder zweite Exoskeletteinheit 11, 12 basierend auf der Entscheidung in Schritt 53 im nachfolgenden Schritt 55 wahlweise derart angesteuert werden, um den Nutzer der jeweiligen Exoskeletteinheit zu übersteuern und um das Mehrkörpersystem in einen sicheren Zustand 56 zu überführen.

Im weiteren Verlauf kann das Mehrkörpersystem erneut in einen Zustand überführt werden, der der ursprünglichen Aufgabenlösung dient. Beispielsweise können, bezugnehmend auf Fig. 7, der erste und zweite Nutzer 2, 3 die Last 40 zeitweise zu zweit tragen, der Nutzer 4 aufstehen und sich dann erneut an der Aufgabe beteiligen.

Fig. 9 zeigt ein Flussdiagramm eines Verfahrens 100 zur Ansteuerung einer ersten und/oder zweiten Exoskeletteinheit 11, 12 eines Exoskelett-Systems 1, wobei das Exoskelett-System die erste Exoskeletteinheit zur Unterstützung eines ersten Körperteils 21 und die zweite Exoskeletteinheit 12 zur Unterstützung eines zweiten Körperteils 22 aufweist, wobei die erste Exoskeletteinheit 11 und die zweite Exoskeletteinheit mechanisch voneinander entkoppelt sind. In einem ersten Schritt 101 wird ein Regelungsmodell bestimmt, wobei das Regelungsmodell auf einem Mehrkörpersystem basiert, welches die erste Exoskeletteinheit 11, die zweite Exoskeletteinheit 12 und den ersten und/oder zweiten Körperteil 21, 22 zumindest teilweise modelliert. In einem zweiten Schritt 102 wird die erste Exoskeletteinheit 11 und/oder die zweite Exoskeletteinheit 12 basierend auf dem Regelungsmodell 31 angesteuert.

Zusammenfassend wird somit insbesondere ein Exoskelett-System beschrieben, welches ein vorteilhaftes Zusammenwirken einer ersten Exoskeletteinheit 11 und einer zweiten Exoskeletteinheit 12 ermöglicht, wobei die erste Exoskeletteinheit 11 und die zweite Exoskeletteinheit 12 mechanisch voneinander entkoppelt sind. Anstatt die erste Exoskeletteinheit 11 und die zweite Exoskeletteinheit 12 getrennt voneinander zu betrachten, wird vorgeschlagen, eine Steuereinrichtung mit einem vorteilhaften Regelungsmodell bereitzustellen, welches auf einem Mehrkörpersystem basiert, welches sowohl die erste Exoskeletteinheit als auch die zweite Exoskeletteinheit berücksichtigt. Vorzugsweise werden in dem Mehrkörpersystem ferner der erste und/oder zweite Körperteil, welcher von den jeweiligen Exoskeletteinheiten unterstützt werden, modelliert und ebenfalls bei der Ansteuerung der ersten und/oder zweiten Exoskeletteinheit berücksichtigt, wodurch die Ansteuerung ferner präzisiert werden kann und ein vorteilhaftes Zusammenwirken insbesondere einer Mehrzahl von Exoskeletteinheiten mit verschiedenen Nutzern oder Körperteilen ermöglicht wird.

Weitere vorteilhafte Anwendungsszenarien für die vorgeschlagene Lösung ergeben sich beispielsweise im Bereich des Zivilschutzes, beispielsweise zur Unterstützung und Koordination von mit Exoskeletteinheiten ausgestatteten Rettungskräften, im Bereich der Rehabilitationsmedizin, oder auch im Leistungssport zu Trainingszwecken, beispielsweise um mithilfe von Exoskeletteinheiten optimierte Bewegungsabläufe zu erlernen.

## Patentansprüche

1. Exoskelett-System (1) aufweisend:
- eine erste Exoskeletteinheit (11) zur Unterstützung eines ersten Körperteils (21);
- eine zweite Exoskeletteinheit (12) zur Unterstützung eines zweiten Körperteils (22); und
- eine Steuereinrichtung (30);
wobei die Steuereinrichtung dazu ausgebildet ist, die erste Exoskeletteinheit (11) und/oder die zweite Exoskeletteinheit (12) basierend auf einem Regelungsmodell (31) anzusteuern, wobei das Regelungsmodell auf einem Mehrkörpersystem (32) basiert, welches
- die erste Exoskeletteinheit (11);
- die zweite Exoskeletteinheit (12); und
- den ersten und/oder zweiten Körperteil (21, 22) modelliert; und
wobei die erste Exoskeletteinheit (11) und die zweite Exoskeletteinheit (12) mechanisch voneinander entkoppelt sind; **dadurch gekennzeichnet, dass** der erste Körperteil (21), welcher von der ersten Exoskeletteinheit (11) unterstützt wird, ein Körperteil eines ersten Nutzers (2) ist; und
wobei der zweite Körperteil (22), welcher von der zweiten Exoskeletteinheit (12) unterstützt wird, ein Körperteil eines zweiten Nutzers (3) ist.

2. Exoskelett-System nach einem der vorhergehenden Ansprüche, wobei die erste Exoskeletteinheit (11) einen ersten Aktor (16) zur Unterstützung des ersten Körperteils (21) aufweist und die zweite Exoskeletteinheit (12) einen zweiten Aktor (17) zur Unterstützung des zweiten Körperteils (22) aufweist; und wobei die Steuereinrichtung (30) dazu ausgebildet ist, den ersten Aktor (16) der ersten Exoskeletteinheit und/oder den zweiten Aktor (17) der zweite Exoskeletteinheit basierend auf dem Regelungsmodell (31) anzusteuern.

3. Exoskelett-System nach einem der vorhergehenden Ansprüche, wobei die Steuereinrichtung (30) dazu ausgebildet ist, das Regelungsmodell (31) mit dem Mehrkörpersystem (32) selbstständig zu erstellen, basierend auf Information (11', 12', 21', 21') über die ersten Exoskeletteinheit (11), die zweiten Exoskeletteinheit (12) und den ersten und/oder zweiten Körperteil (22).

4. Exoskelett-System nach einem der vorhergehenden Ansprüche, ferner mit einem Sensor (32) zur Erfassung einer Relativposition zwischen der ersten Exoskeletteinheit (11) und der zweiten Exoskeletteinheit (12).

5. Exoskelett-System nach Anspruch einem der vorhergehenden Ansprüche, wobei die Steuereinrichtung (30) dazu ausgebildet ist, dass Regelungsmodell (31) ferner adaptiv basierend auf wenigstens einem Kontextparameter (33) zu erstellen.

6. Exoskelett-System nach einem der vorhergehenden Ansprüche, wobei die Steuereinrichtung (30) dazu ausgebildet ist, dass Regelungsmodell (31) adaptiv basierend auf einem physiologischen Zustand (34) eines Nutzers (2, 3) der ersten und/oder zweiten Exoskeletteinheit (11, 12) zu erstellen.

7. Exoskelett-System nach einem der vorhergehenden Ansprüche, wobei die Steuereinrichtung (30) dazu ausgebildet ist, dass Regelungsmodell (31) adaptiv basierend auf wenigstens einem Umweltparameter (35) zu erstellen.

8. Exoskelett-System nach einem der vorhergehenden Ansprüche, wobei die Steuereinrichtung (30) dazu ausgebildet ist, das Regelungsmodell (31) adaptiv basierend auf einer zu lösenden Aufgabe (36) zu erstellen.

9. Exoskelett-System nach einem der vorhergehenden Ansprüche, wobei die Steuereinrichtung (30) dazu ausgebildet ist, ein Steuersignal (41) zur Ansteuerung der ersten und/oder zweiten Exoskeletteinheit (11, 12), welches durch eine Interaktion eines Nutzers (2, 3) mit der ersten und/oder zweiten Exoskeletteinheit (11, 12) hervorgerufen wird, in Abhängigkeit von der zu lösenden Aufgabe (36) und/oder basierend auf einem Zustand des Mehrkörpersystems (32) zu korrigieren.

10. Exoskelett-System nach einem der vorhergehenden Ansprüche, wobei die Steuereinheit (30) dazu ausgebildet ist, eine technische Integrität (37) der ersten und/oder zweiten Exoskeletteinheit (11, 12) zu bestimmen und das Regelungsmodell (31) ferner adaptiv basierend auf der technischen Integrität zu erstellen.

11. Exoskelett-System nach einem der vorhergehenden Ansprüche, wobei die Steuereinheit (30) ferner dazu ausgebildet ist, die erste und/oder zweite Exoskeletteinheit (11, 12) wahlweise derart anzusteuern, um den Nutzer (2, 3) der jeweiligen Exoskeletteinheit (11, 12) zu unterstützen oder zu übersteuern.

12. Exoskelett-System nach Anspruch 11, wobei die Steuereinrichtung (30) dazu ausgebildet ist, den Nutzer (2, 3) der jeweiligen Exoskeletteinheit (11, 12) zu übersteuern und die erste und/oder zweite Exoskeletteinheit derart anzusteuern, dass das Mehrkörpersystem (32) in einen sicheren Zustand zu überführt wird.

13. Steuereinrichtung (30) zur Ansteuerung einer ersten und/oder zweiten Exoskeletteinheit (11, 12) eines Exoskelett-Systems (1), wobei das Exoskelett-System die erste Exoskeletteinheit (11) zur Unterstützung eines ersten Körperteils (21) und die zweite Exoskeletteinheit (12) zur Unterstützung eines zweiten Körperteils (22) aufweist;
wobei die Steuereinrichtung (30) dazu ausgebildet ist, die erste Exoskeletteinheit und/oder die zweite Exoskeletteinheit basierend auf einem Regelungsmodell (31) anzusteuern, wobei das Regelungsmodell auf einem Mehrkörpersystem (32) basiert, welches
- die erste Exoskeletteinheit (11),
- die zweite Exoskeletteinheit (12); und
- den ersten und/oder zweiten Körperteil (21, 22) modelliert; wobei die erste Exoskeletteinheit (11) und die zweite Exoskeletteinheit (12) mechanisch voneinander entkoppelt sind;
**dadurch gekennzeichnet, dass** der erste Körperteil (21), welcher von der ersten Exoskeletteinheit (11) unterstützt wird, ein Körperteil eines ersten Nutzers (2) ist; und
wobei der zweite Körperteil (22), welcher von der zweiten Exoskeletteinheit (12) unterstützt wird, ein Körperteil eines zweiten Nutzers (3) ist.

14. Verfahren (100) zur Ansteuerung einer ersten und/oder zweiten Exoskeletteinheit (11, 12) eines Exoskelett-Systems (1), wobei das Exoskelett-System die erste Exoskeletteinheit (11) zur Unterstützung eines ersten Körperteils (21) und die zweite Exoskeletteinheit (12) zur Unterstützung eines zweiten Körperteils (22) aufweist; wobei die erste Exoskeletteinheit und die zweite Exoskeletteinheit mechanisch voneinander entkoppelt sind; wobei der erste Körperteil (21), welcher von der ersten Exoskeletteinheit (11) unterstützt wird, ein Körperteil eines ersten Nutzers (2) ist; und wobei der zweite Körperteil (22), welcher von der zweiten Exoskeletteinheit (12) unterstützt wird, ein Körperteil eines zweiten Nutzers (3) ist; wobei das Verfahren die folgenden Schritte aufweist:
- Bestimmen (101) eines Regelungsmodells, wobei das Regelungsmodell auf einem Mehrkörpersystem basiert, welches
- die erste Exoskeletteinheit,
- die zweite Exoskeletteinheit; und
- den ersten und/oder zweiten Körperteil, modelliert; und
- Ansteuern (102) der ersten Exoskeletteinheit und/oder der zweiten Exoskeletteinheit basierend auf dem Regelungsmodell.

15. Computerprogrammprodukt mit Programmcode, der dazu ausgelegt ist, ein Verfahren (100) nach Anspruch 14 auszuführen, wenn das Computerprogrammprodukt auf einer Datenverarbeitungseinrichtung ausgeführt wird.

## Claims

1. Exoskeleton system (1) comprising:
- a first exoskeleton unit (11) adapted to support a first body part (21);
- a second exoskeleton unit (12) adapted to support a second body part (22); and
- a control device (30);
wherein the control device is adapted to control the first exoskeleton unit (11) and/or the second exoskeleton unit (12) based on a control model (31), wherein the control model is based on a multibody system (32) which models
- the first exoskeleton unit (11);
- the second exoskeleton unit (12); and
- the first and/or second body part (21, 22); and
wherein the first exoskeleton unit (11) and the second exoskeleton unit (12) are mechanically decoupled from each other;
**characterized in that** the first body part (21) supported by the first exoskeleton unit (11) is a body part of a first user (2); and wherein the second body part (22) supported by the second exoskeleton unit (12) is a body part of a second user (3).

2. Exoskeleton system according to any of the preceding claims, wherein the first exoskeleton unit (11) comprises a first actuator (16) for supporting the first body part (21) and the second exoskeleton unit (12) comprises a second actuator (17) for supporting the second body part (22); and wherein the control device (30) is configured to control the first actuator (16) of the first exoskeleton unit and/or the second actuator (17) of the second exoskeleton unit based on the control model (31).

3. Exoskeleton system according to any of the preceding claims, wherein the control device (30) is adapted to autonomously create the control model (31) with the multibody system (32) based on information (11', 12', 21', 21') about the first exoskeleton unit (11), the second exoskeleton unit (12) and the first and/or second body part (22).

4. Exoskeleton system according to any of the preceding claims, further comprising a sensor (32) for detecting a relative position of the first exoskeleton unit (11) and respect to the second exoskeleton unit (12) with respect to each other.

5. Exoskeleton system according to any of the preceding claims, wherein the control device (30) is adapted to adaptively create the control model (31) based on at least one context parameter (33).

6. Exoskeleton system according to any of the preceding claims, wherein the control device (30) is adapted to adaptively create the control model (31) based on a physiological state (34) of a user (2, 3) of the first and/or second exoskeleton unit (11, 12).

7. Exoskeleton system according to any of the preceding claims, wherein the control device (30) is adapted to adaptively create the control model (31) based on at least one environmental parameter (35).

8. Exoskeleton system according to any of the preceding claims, wherein the control device (30) is adapted to adaptively create the control model (31) based on a task (36) to be solved.

9. Exoskeleton system according to any of the preceding claims, wherein the control device (30) is adapted to correct a control signal (41) for controlling the first and/or second exoskeleton unit (11, 12), which is caused by an interaction of a user (2, 3) with the first and/or second exoskeleton unit (11, 12), depending on the task (36) to be solved and/or based on a state of the multibody system (32).

10. Exoskeleton system according to any of the preceding claims, wherein the control unit (30) is adapted to determine a technical integrity (37) of the first and/or second exoskeleton unit (11, 12) and to further adaptively build the control model (31) based on the technical integrity.

11. Exoskeleton system according to any of the preceding claims, wherein the control unit (30) is further adapted to selectively control the first and/or second exoskeleton unit (11, 12) to support or override the user (2, 3) of the respective exoskeleton unit (11, 12).

12. Exoskeleton system according to claim 12, wherein the control device (30) is adapted to override the user (2, 3) of the respective exoskeleton unit (11, 12) and to control the first and/or second exoskeleton unit such that the multibody system (32) is transitioned into a safe state.

13. Control device (30) for controlling a first and/or second exoskeleton unit (11, 12) of an exoskeleton system (1), wherein the exoskeleton system comprises the first exoskeleton unit (11) adapted to support a first body part (21) and the second exoskeleton unit (12) adapted to support a second body part (22);
wherein the control device (30) is adapted to control the first exoskeleton unit and/or the second exoskeleton unit based on a control model (31), wherein the control model is based on a multibody system (32) which models
- the first exoskeleton unit (11),
- the second exoskeleton unit (12); and
- the first and/or second body part (21, 22);
wherein the first exoskeleton unit (11) and the second exoskeleton unit (12) are mechanically decoupled from each other;
**characterized in that** the first body part (21) supported by the first exoskeleton unit (11) is a body part of a first user (2); and wherein the second body part (22) supported by the second exoskeleton unit (12) is a body part of a second user (3).

14. A method (100) for controlling a first and/or second exoskeleton unit (11, 12) of an exoskeleton system (1), the exoskeleton system comprising the first exoskeleton unit (11) adapted to support a first body part (21) and the second exoskeleton unit (12) adapted to support a second body part (22); wherein said first exoskeleton unit and said second exoskeleton unit are mechanically decoupled from each other; wherein the first body part (21) supported by the first exoskeleton unit (11) is a body part of a first user (2); and wherein the second body part (22) supported by the second exoskeleton unit (12) is a body part of a second user (3); said method comprising the following steps:
- determining (101) a control model, wherein the control model is based on a multibody system which models
- the first exoskeleton unit,
- the second exoskeleton unit; and
- the first and/or second body part; and
- controlling (102) the first exoskeleton unit and/or the second exoskeleton unit based on the control model.

15. A computer program product comprising program code adapted to execute the method (100) according to claim 14 when said computer program product is executed on a data processing device.

## Revendications

1. Système d'exosquelette (1), présentant :
- une première unité d'exosquelette (11) pour supporter une première partie du corps (21) ;
- une deuxième unité d'exosquelette (12) pour supporter une deuxième partie du corps (22) ; et
- un dispositif de commande (30) ;
le dispositif de commande étant réalisé pour commander la première unité d'exosquelette (11) et/ou la deuxième unité d'exosquelette (12) sur la base d'un modèle de réglage (31), le modèle de réglage étant basé sur un système à plusieurs corps (32) qui modélise
- la première unité d'exosquelette (11) ;
- la deuxième unité d'exosquelette (12) ; et
- la première et/ou la deuxième partie du corps (21, 22) ; et
la première unité d'exosquelette (11) et la deuxième unité d'exosquelette (12) étant désaccouplées mécaniquement l'une de l'autre ;
**caractérisé en ce que**
la première partie du corps (21) qui est supportée par la première unité d'exosquelette (11) est une partie du corps d'un premier utilisateur (2) ; et
la deuxième partie du corps (22) qui est supportée par la deuxième unité d'exosquelette (12) est une partie du corps d'un deuxième utilisateur (3).

2. Système d'exosquelette selon l'une quelconque des revendications précédentes, dans lequel la première unité d'exosquelette (11) présente un premier actionneur (16) pour supporter la première partie du corps (21) et la deuxième unité d'exosquelette (12) présente un deuxième actionneur (17) pour supporter la deuxième partie du corps (22) ; et le dispositif de commande (30) étant réalisé de manière à commander le premier actionneur (16) de la première unité d'exosquelette et/ou le deuxième actionneur (17) de la deuxième unité d'exosquelette sur la base du modèle de réglage (31).

3. Système d'exosquelette selon l'une quelconque des revendications précédentes, dans lequel le dispositif de commande (30) est réalisé pour créer de manière autonome le modèle de réglage (31) avec le système à plusieurs corps (32), sur la base d'informations (11', 12', 21', 21') concernant la première unité d'exosquelette (11), la deuxième unité d'exosquelette (12) et la première et/ou la deuxième partie du corps (22).

4. Système d'exosquelette selon l'une quelconque des revendications précédentes, comprenant en outre un capteur (32) pour détecter une position relative entre la première unité d'exosquelette (11) et la deuxième unité d'exosquelette (12).

5. Système d'exosquelette selon la revendication l'une quelconque des revendications précédentes, dans lequel le dispositif de commande (30) est réalisé pour créer le modèle de réglage (31) en outre de manière adaptative sur la base d'au moins un paramètre de contexte (33).

6. Système d'exosquelette selon l'une quelconque des revendications précédentes, dans lequel le dispositif de commande (30) est réalisé pour créer le modèle de réglage (31) de manière adaptative sur la base d'un état physiologique (34) d'un utilisateur (2, 3) de la première et/ou de la deuxième unité d'exosquelette (11, 12).

7. Système d'exosquelette selon l'une quelconque des revendications précédentes, dans lequel le dispositif de commande (30) est réalisé pour créer le modèle de réglage (31) de manière adaptative sur la base d'au moins un paramètre de l'environnement (35).

8. Système d'exosquelette selon l'une quelconque des revendications précédentes, dans lequel le dispositif de commande (30) est réalisé pour créer le modèle de réglage (31) de manière adaptative sur la base d'un objectif à résoudre (36).

9. Système d'exosquelette selon l'une quelconque des revendications précédentes, dans lequel le dispositif de commande (30) est réalisé de manière à corriger un signal de commande (41) pour commander la première et/ou la deuxième unité d'exosquelette (11, 12), lequel est provoqué par une interaction d'un utilisateur (2, 3) avec la première et/ou la deuxième unité d'exosquelette (11, 12), en fonction de l'objectif à résoudre (36) et/ou sur la base d'un état du système à plusieurs corps (32).

10. Système d'exosquelette selon l'une quelconque des revendications précédentes, dans lequel l'unité de commande (30) est réalisée de manière à établir une intégrité technique (37) de la première et/ou de la deuxième unité d'exosquelette (11, 12) et à créer le modèle de réglage (31) en outre de manière adaptative sur la base de l'intégrité technique.

11. Système d'exosquelette selon l'une quelconque des revendications précédentes, dans lequel l'unité de commande (30) est en outre réalisée de manière à commander la première et/ou la deuxième unité d'exosquelette (11, 12) de manière sélective afin de supporter ou de contrôler l'utilisateur (2, 3) de l'unité d'exosquelette respective (11, 12).

12. Système d'exosquelette selon la revendication 11, dans lequel le dispositif de commande (30) est réalisé de manière à contrôler l'utilisateur (2, 3) de l'unité d'exosquelette respective (11, 12) et à commander la première et/ou la deuxième unité d'exosquelette de telle sorte que le système à plusieurs corps (32) soit mis dans un état sécurisé.

13. Dispositif de commande (30) pour commander une première et/ou une deuxième unité d'exosquelette (11, 12) d'un système d'exosquelette (1), le système d'exosquelette présentant la première unité d'exosquelette (11) pour supporter une première partie du corps (21) et la deuxième unité d'exosquelette (12) pour supporter une deuxième partie du corps (22) ;
le dispositif de commande (30) étant réalisé de manière à commander la première unité d'exosquelette et/ou la deuxième unité d'exosquelette sur la base d'un modèle de réglage (31), le modèle de réglage étant basé sur un système à plusieurs corps (32) qui
- modélise la première unité d'exosquelette (11),
- la deuxième unité d'exosquelette (12) ; et
- la première et/ou la deuxième partie du corps (21, 22) ; la première unité d'exosquelette (11) et la deuxième unité d'exosquelette (12) étant désaccouplées mécaniquement l'une de l'autre ;
**caractérisé en ce que**
la première partie du corps (21) qui est supportée par la première unité d'exosquelette (11) est une partie du corps d'un premier utilisateur (2) ; et
la deuxième partie du corps (22) qui est supportée par la deuxième unité d'exosquelette (12) est une partie du corps d'un deuxième utilisateur (3).

14. Procédé (100) de commande d'une première/ou d'une deuxième unité d'exosquelette (11, 12) d'un système d'exosquelette (1), le système d'exosquelette présentant la première unité d'exosquelette (11) pour supporter une première partie du corps (21) et la deuxième unité d'exosquelette (12) pour supporter une deuxième partie du corps (22) ; la première unité d'exosquelette et la deuxième unité d'exosquelette étant désaccouplées mécaniquement l'une de l'autre ; la première partie du corps (21) qui est supportée par la première unité d'exosquelette (11) étant une partie du corps d'un premier utilisateur (2) ; et la deuxième partie du corps (22) qui est supportée par la deuxième unité d'exosquelette (12) étant une partie du corps d'un deuxième utilisateur (3) ; le procédé présentant les étapes suivantes :
- détermination (101) d'un modèle de réglage, le modèle de réglage étant basé sur un système à plusieurs corps, qui modélise
- la première unité d'exosquelette,
- la deuxième unité d'exosquelette ; et
- la première et/ou la deuxième partie du corps ; et
- commande (102) de la première unité d'exosquelette et/ou de la deuxième unité d'exosquelette sur la base du modèle de réglage.

15. Produit de programme informatique comprenant un code de programme qui est conçu pour mettre en œuvre un procédé (100) selon la revendication 14 lorsque le produit de programme informatique est exécuté sur un dispositif de traitement de données.
